# EUROPEAN PATENT APPLICATION

(11) **EP 4 642 077 A1**
(43) Date of publication of application: **29.10.2025**
(21) Application number: 22969034.2
(22) Date of filing: 23.12.2022
(51) Int. Cl.: H04W 24/02

(54) **RESOURCE RESTRICTION INDICATION METHOD AND APPARATUS, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Stöckeler, Ferdinand
(86) International application number: PCT/CN2022/141694
(87) International publication number: WO 2024/130747

(57) **Abstract**

The disclosure relates to a resource restriction indication method and apparatus, and a storage medium. The resource restriction indication method comprises: receiving first configuration information, the first configuration information being used for configuring at least one channel measurement resource, the at least one channel measurement resource comprising N channel state information reference signal (CSI-RS) resources, and N being a positive integer; and receiving second configuration information, the second configuration information being used for indicating resource restriction indications corresponding to the N CSI-RS resources. According to the method provided by the disclosure, a CBSR indication, an amplitude subset restriction indication and/or a rank restriction indication for a universal configuration or an independent configuration of a plurality of CSI-RS resources are provided, thereby improving the coherent joint transmission(CJT) capability of PDSCHs.

## Description

### TECHNICAL FIELD

The disclosure relates to the field of communication technologies, and specifically to a method and an apparatus for a resource restriction indication, and a storage medium.

### BACKGROUND

In new radio (NR) technologies, when a communication frequency band is in a frequency band 2, since a high-frequency channel attenuates rapidly, a beam-based transmission and reception are required to ensure coverage.

In the related art, to improve a quality of communication service, a resource restriction indication needs to be performed. For example, a codebook subset restriction (CBSR), and/or an amplitude subset restriction needs to be performed. The CBSR is used to inform the terminal which codebook may not be used, that is, which beam may not be used, because that may cause interference to a neighboring cell. The amplitude subset restriction is similar to the CBSR. For example, although a certain beam is not completely restricted from being used, a maximum amplitude in the beam is restricted, that is, a large interference is avoided.

The above method for a resource restriction indication is mainly for a communication transmission of one transmission reception point (TRP). However, in order to improve coverage of an edge and provide a balanced service quality for a user in a service area, when there are multiple TRPs in a network device (such as a base station), m-TRP/multi-panel may be used to provide services for a terminal. If the network device is configured with a channel measurement resource (CMR) including N channel state information reference signal (CSI-RS) resources, it means that the network device indicates N TRPs, where N is a positive integer.

When one CMR including N CSI-RSs is configured for the terminal, how to configure a method for a resource restriction indication for the N CSI-RSs is a problem that needs to be solved.

### SUMMARY

To overcome problems existing in the related art, the disclosure provides a method and an apparatus for a resource restriction indication, and a storage medium.

According to a first aspect of embodiments of the disclosure, a method for a resource restriction indication is provided, applied to a terminal, including:
receiving first configuration information, the first configuration information being used to configure at least one channel measurement resource (CMR), and the at least one CMR including N channel state information reference signal (CSI-RS) resources, where N is a positive integer; and
receiving second configuration information, the second configuration information being used to indicate the resource restriction indication corresponding to the N CSI-RS resources.

According to a second aspect of embodiments of the disclosure, a method for a resource restriction indication is provided, applied to a network device, including:
sending first configuration information, the first configuration information being used to configure at least one CMR, and the at least one CMR including N CSI-RS resources, where N is a positive integer; and
sending second configuration information, the second configuration information being used to indicate the resource restriction indication corresponding to the N CSI-RS resources.

According to a third aspect of embodiments of the disclosure, an apparatus for a resource restriction indication is provided, including:
a receiving unit, configured to receive first configuration information, the first configuration information being used to configure at least one CMR, and the at least one CMR including N CSI-RS resources, where N is a positive integer.

The receiving unit is further configured to receive second configuration information, the second configuration information is used to indicate the resource restriction indication corresponding to the N CSI-RS resources.

According to a fourth aspect of embodiments of the disclosure, an apparatus for a resource restriction indication is provided, including:
a sending unit, configured to send first configuration information, the first configuration information being used to configure at least one CMR, and the at least one CMR including N CSI-RS resources, where N is a positive integer.

The sending unit is further configured to send second configuration information, the second configuration information is used to indicate the resource restriction indication corresponding to the N CSI-RS resources.

According to a fifth aspect of embodiments of the disclosure, a device for a resource restriction indication is provided, including:
a processor; and
a memory for storing instructions executable by the processor.

The processor is configured to implement the method described in the first aspect or any one of implementations of the first aspect.

According to a sixth aspect of embodiments of the disclosure, a device for a resource restriction indication is provided, including:
a processor; and
a memory for storing instructions executable by the processor.

The processor is configured to implement the method described in the second aspect or any one of implementations of the second aspect.

According to a seventh aspect of embodiments of the disclosure, a storage medium for storing instructions is provided. When instructions in the storage medium are executed by a processor of a terminal, the terminal is caused to implement the method described in the first aspect or any one of implementations of the first aspect.

According to an eighth aspect of embodiments of the disclosure, a storage medium for storing instructions is provided. When the instructions in the storage medium are executed by a processor of a network device, the network device is caused to implement the method described in the second aspect or any one of implementations of the second aspect.

The technical solution provided by the embodiments of the disclosure may include following beneficial effects: for a scenario where the network device configures one CMR including the N CSI-RS resources for the terminal and uses the multiple TRPs to provide a service to the terminal, the resource restriction indications for multiple CSI-RS resources are proposed, which enhances a coherent joint transmission (CJT) capability of a physical downlink shared channel (PDSCH).

It may be understood that above general description and following detailed description are exemplary and explanatory only, which is not be construed as a limitation to the disclosure.

### BRIEF DESCRIPTION OF THE DRAWINGS

The accompanying drawings, which are incorporated in and constitute a part of this specification, illustrate embodiments consistent with the disclosure and serve to explain the principles of the disclosure together with the description.
FIG. 1 is a schematic diagram illustrating a wireless communication system according to an exemplary embodiment.
FIG. 2 is a flowchart illustrating a method for a resource restriction indication according to an exemplary embodiment.
FIG. 3 is a flowchart illustrating a method for a codebook subset restriction (CBSR) indication according to an exemplary embodiment.
FIG. 4 is a flowchart illustrating a method for a CBSR indication according to an exemplary embodiment.
FIG. 5 is a flowchart illustrating a method for a CBSR indication according to an exemplary embodiment.
FIG. 6 is a flowchart illustrating a method for an amplitude subset restriction indication according to an exemplary embodiment.
FIG. 7 is a flowchart illustrating a method for an amplitude subset restriction indication according to an exemplary embodiment.
FIG. 8 is a flowchart illustrating a method for an amplitude subset restriction indication according to an exemplary embodiment.
FIG. 9 is a flowchart illustrating a method for a rank restriction indication according to an exemplary embodiment.
FIG. 10 is a flowchart illustrating a method for a rank restriction indication according to an exemplary embodiment.
FIG. 11 is a flowchart illustrating a method for a rank restriction indication according to an exemplary embodiment.
FIG. 12 is a flowchart illustrating a method for a resource restriction indication according to an exemplary embodiment.
FIG. 13 is a block diagram illustrating an apparatus for a resource restriction indication according to an exemplary embodiment.
FIG. 14 is a block diagram illustrating an apparatus for a resource restriction indication according to an exemplary embodiment.
FIG. 15 is a block diagram illustrating a device according to an exemplary embodiment.
FIG. 16 is a block diagram illustrating a device according to an exemplary embodiment.

### DETAILED DESCRIPTION

Reference will now be made in detail to exemplary embodiments, examples of which are illustrated in the accompanying drawings. The following description refers to the accompanying drawings in which the same number in different drawings represent the same or similar elements unless otherwise represented. The implementations set forth in the following description of exemplary embodiments do not represent all implementations consistent with the disclosure.

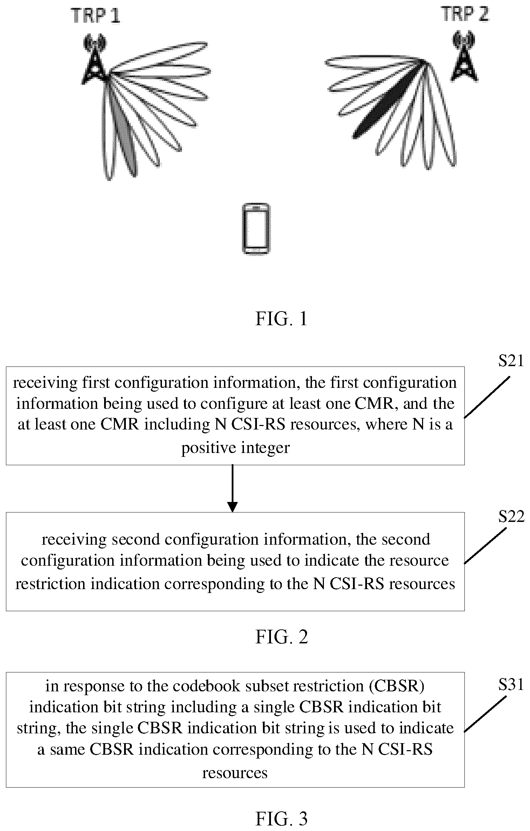

A method for a resource restriction indication in embodiments of the disclosure may be applied to a wireless communication system illustrated in FIG. 1. As illustrated in FIG. 1, the wireless communication system includes a network device and a terminal. The terminal connects to the network device via a wireless resource and performs a data transmission.

It may be understood that the wireless communication system illustrated in FIG. 1 is only schematic. The wireless communication system may also include other network devices, such as a core network device, a wireless relay device, and a wireless backhaul device, which are not illustrated in FIG. 1. Embodiments of the disclosure do not limit a number of network devices or terminals included in the wireless communication system.

Furthermore, it may be understood that the wireless communication system in embodiments of the disclosure is a network that provides a wireless communication function. The wireless communication system may employ different communication technologies, such as code division multiple access (CDMA), wideband code division multiple access (WCDMA), time division multiple access (TDMA), frequency division multiple access (FDMA), orthogonal frequency-division multiple access (OFDMA), single carrier FDMA (SC-FDMA), or carrier sense multiple access/collision avoidance. Depending on a factor such as capacities, velocities, latencies and the like of different networks, networks may be categorized into a 2G (generation) network, a 3G network, a 4G network, or a future evolved network, such as a 5G network. The 5G network may also be referred to as a new radio (NR) network. For convenience, the wireless communication network may sometimes be simply referred to as the network in the disclosure.

Further, the network device mentioned in the disclosure may also be called radio access network device. This radio access network device may include: a base station, an evolved Node B (eNB), a home base station, an access point (AP) in a wireless fidelity (Wi-Fi) system, a wireless relay node, a wireless backhaul node, a transmission point (TP), or a transmission and reception point (TRP). It may also be a next generation node B (gNB) in an NR system or a component or a part of a base station. It may be understood that embodiments of the disclosure do not limit a detailed technology or a detailed device form adopted by the network device. In the disclosure, the network device may provide communication coverage for a specific geographic area and communicate with a terminal located in a coverage area (cell). Moreover, the network device may also be a vehicle-mounted device in a vehicle-to-everything (V2X) communication system.

Furthermore, the terminal mentioned in the disclosure may also be called terminal, user equipment (UE), mobile station (MS), mobile terminal (MT) or the like. The terminal is a device that provides speech and/or data connectivity to a user. For example, the terminal may be a handheld device or a vehicle-mounted device with a wireless connection function. Presently, an example of the terminal includes a mobile phone, a customer premise equipment (CPE), a pocket personal computer (PPC), a palmtop computer, a personal digital assistant (PDA), a laptop, a tablet, a wearable device, a vehicle-mounted device or the like. In addition, in the V2X communication system, the terminal may also be the vehicle-mounted device. It may be understood that embodiments of the disclosure do not limit a detailed technology and a detailed device form adopted by the terminal.

In the related art, in order to improve a quality of communication service, a resource restriction indication needs to be performed, for example, a codebook subset restriction (CBSR), and/or an amplitude subset restriction needs to be performed. The CBSR is used to inform the terminal which codebook may not be used, that is, inform which beam may not be used, because the codebook may cause interference to a neighboring cell. The amplitude subset restriction is similar to the CBSR. For example, although a certain beam is not completely restricted from being used, a maximum amplitude in the beam is restricted, that is, a large interference may be avoided.

Meanwhile, to provide a more balanced service quality in the coverage area, a coordinated multiple point transmission (CoMP) technology is introduced.

The CoMP technology may generally be divided into a coherent joint transmission (CJT) and a non-coherent joint transmission (NCJT). The CJT refers to a process where each data stream is mapped to a multi-TRP (m-TRP)/panel participating in a collaboration by a weighting vector. The CJT equivalent to splicing multiple sub-arrays into a higher-dimensional virtual array, to achieve a higher beamforming or precoding gain.

The 3rd generation partnership project (3GPP) working group currently discusses that the base station uses up to four TRPs to provide a CJT service for a PDSCH transmission to the terminal. It has been agreed currently that if the base station configures one channel measurement resource (CMR) including N CSI-RS resources, it means that the base station indicates N TRPs.

Here, each CSI-RS corresponds to the same number of antenna ports. A configurable number of antenna ports for each CSI-RS are illustrated in Table 1.

**Table 1**

| Number of CSI-RS antenna ports, P_{CSI-RS} | (N₁, N₂) | (O₁, O₂) |
|---|---|---|
| 4 | (2, 1) | (4, 1) |
| 8 | (2, 2) | (4, 4) |
| | (4, 1) | (4, 1) |
| 12 | (3, 2) | (4, 4) |
| | (6, 1) | (4, 1) |
| 16 | (4, 2) | (4, 4) |
| | (8, 1) | (4, 1) |
| 24 | (4, 3) | (4, 4) |
| | (6, 2) | (4, 4) |
| | (12, 1) | (4, 1) |
| 32 | (4, 4) | (4, 4) |
| | (8, 2) | (4, 4) |
| | (16, 1) | (4, 1) |

Here, P_{CSI-RS} represents the number of antenna ports corresponding to the CSI-RS, N₁ represents a number of antenna ports in a first dimension, N₂ represents a number of antenna ports in a second dimension, O₁ represents an oversampling ratio in the first dimension, and O₂ represents an oversampling ratio in the second dimension.

In a conventional case, when considering a transmission of one TRP, a codebook restriction for a codebook selected in a Rel-16 Type II codebook and a Rel-17 port is as follows.

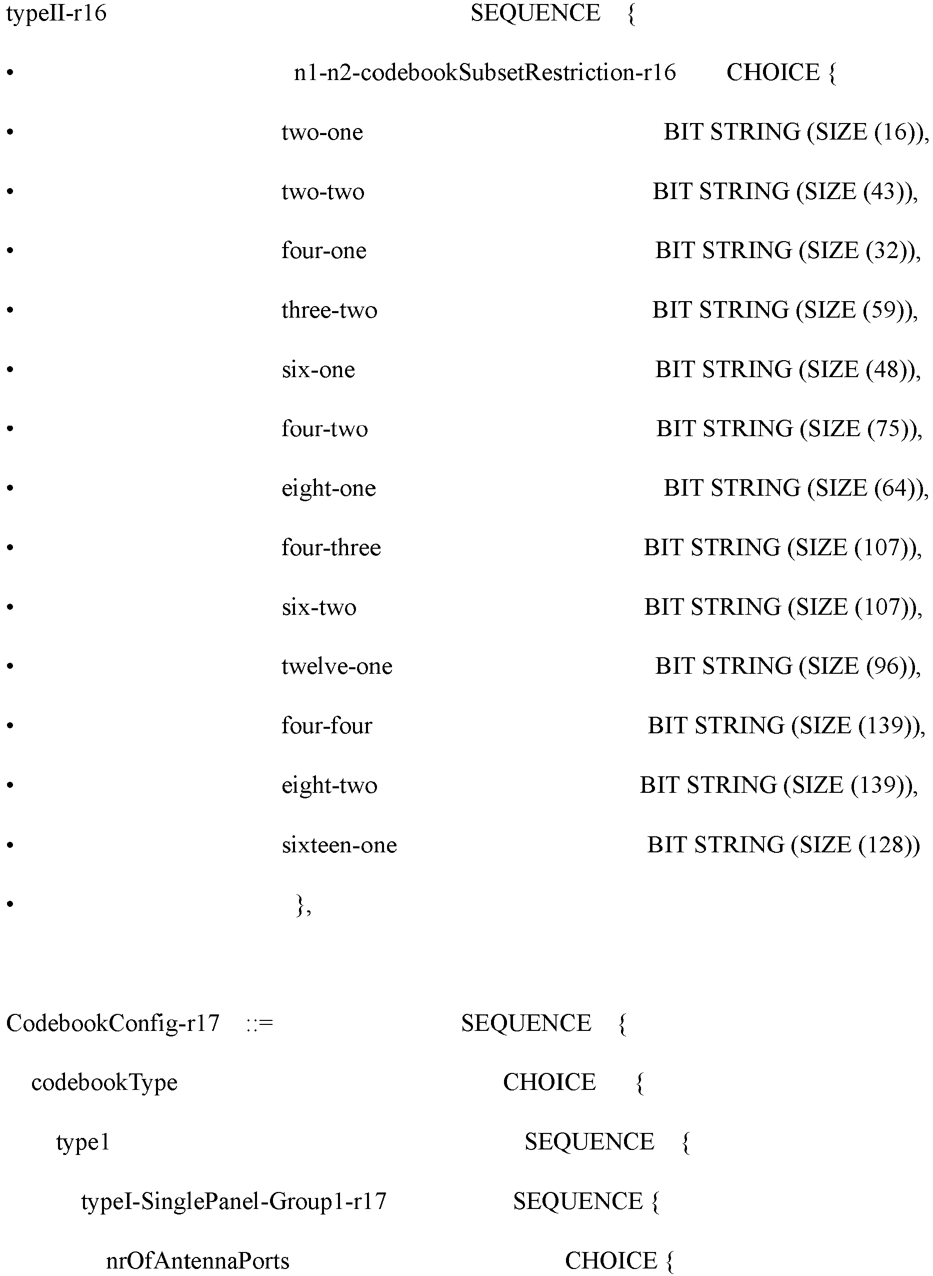

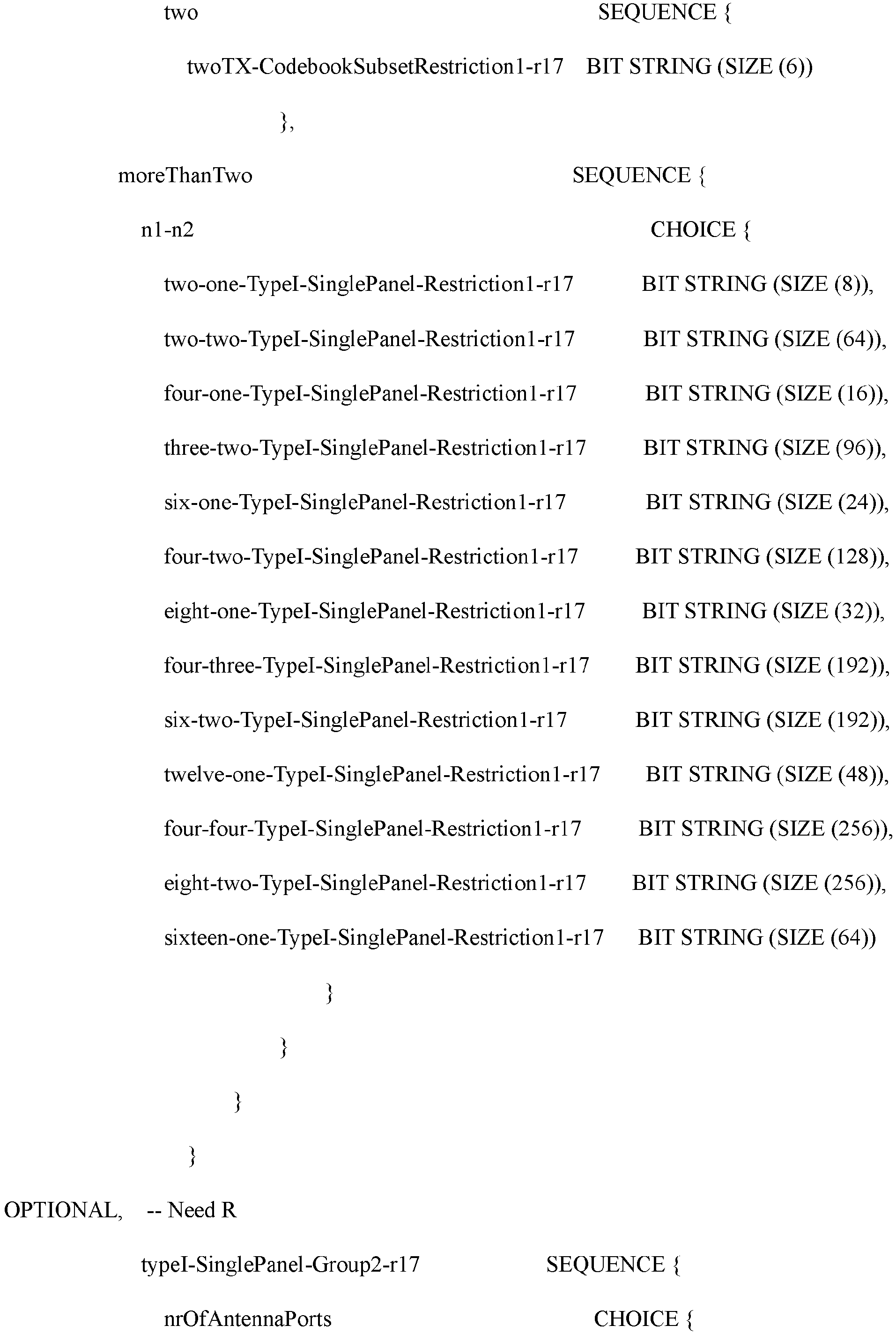

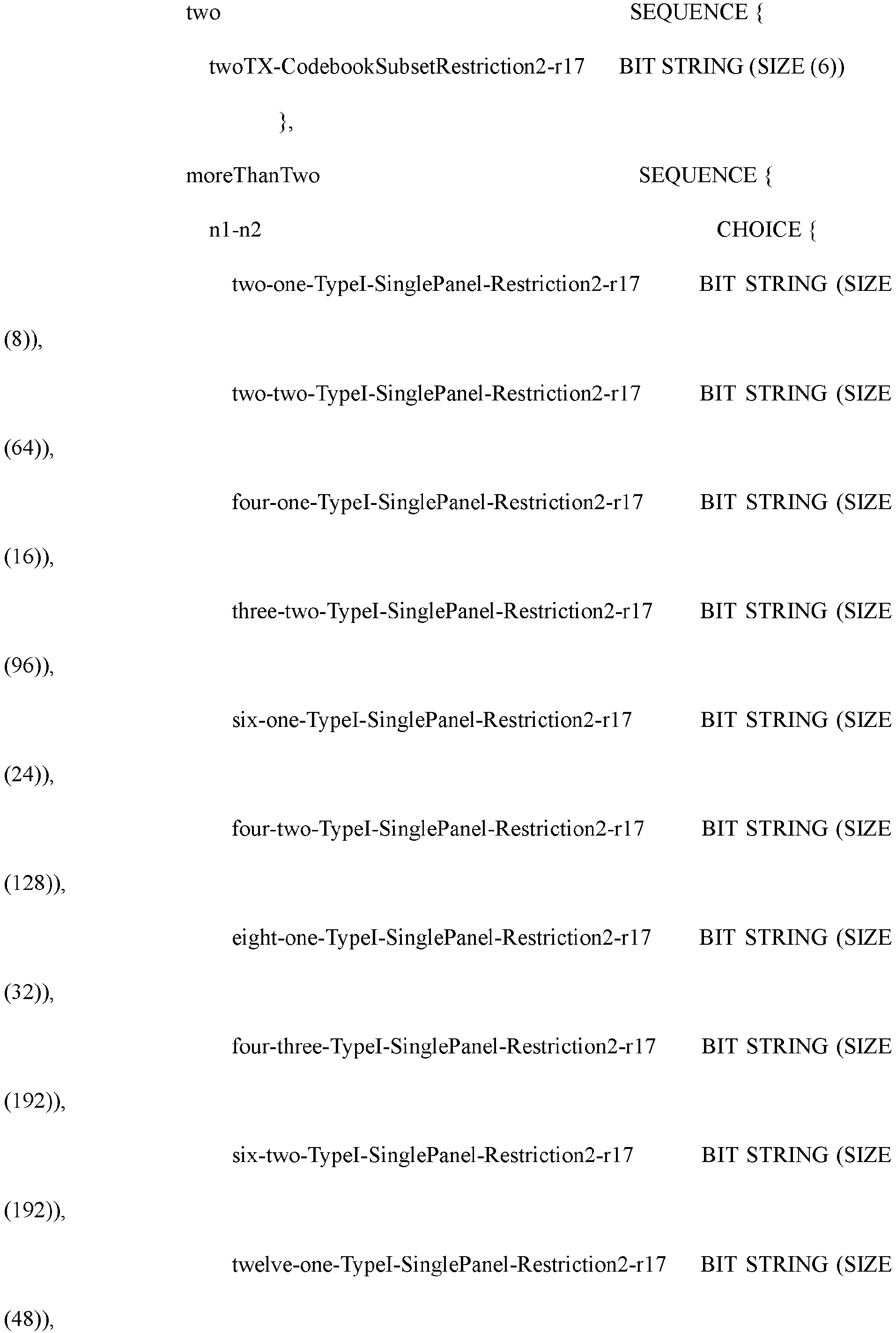

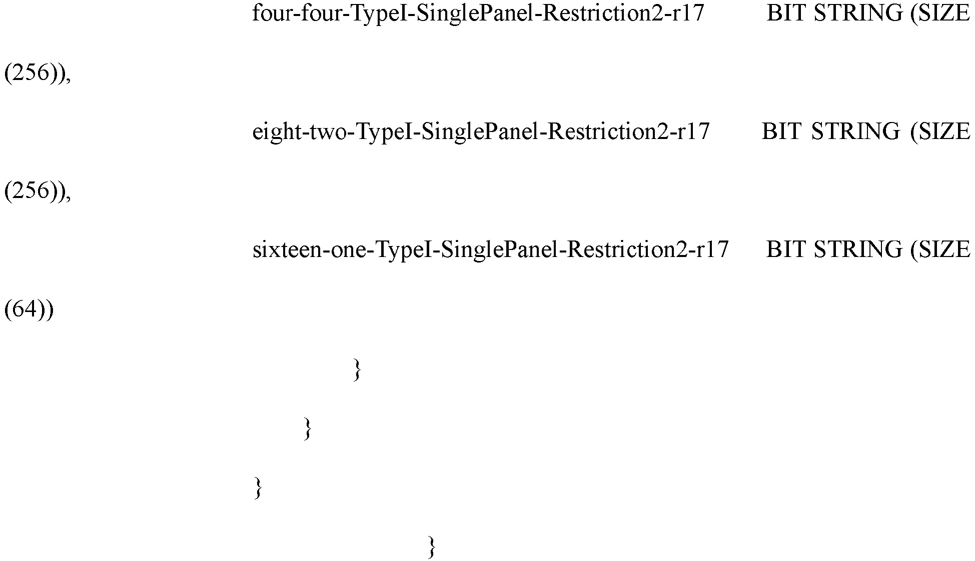

SEQUENCE represents a codebook sequence, codebookSubsetRestriction represents the CBSR, BIT STRING represents a bit string, CodebookConfig represents a codebook configuration parameter, codebook Type represents a codebook type, typeI-SinglePanel represents a type I of a single panel, and nrOfAntennaPorts represents a number of CSI-RS ports. The above codebook restriction indicates that, when a single panel serves the terminal, different-sized bit strings for the CBSR may be configured for a case where the CSI-RS has different numbers of ports.

When a CMR including N CSI-RSs is configured for the terminal, how to configure the method for a resource restriction indication for the N CSI-RSs is a problem that needs to be solved.

In view of this, the disclosure provides a method for a resource restriction indication. At least one CMR which including N CSI-RS resources is configured based on first configuration information received by the terminal, and then a resource restriction indication=corresponding to the N CSI-RS resources is obtained based on second configuration information received by the terminal. For a scenario where the network device configures one CMR including the N CSI-RS resources for the terminal and uses multiple TRPs to provide a service to the terminal, the resource restriction indication for multiple CSI-RS resources is proposed, which enhances a CJT capability of the PDSCH.

FIG. 2 is a flowchart illustrating a method for a resource restriction indication according to an exemplary embodiment. The method for the resource restriction indication is applied to the terminal. As illustrated in FIG. 2, the method for the resource restriction indication includes the following.

At block S21, first configuration information is received, the first configuration information is used to configure at least one CMR, and the at least one CMR includes N channel state information reference signal (CSI-RS) resources.

N is a positive integer.

At block S22, second configuration information is received, and the second configuration information is used to indicate the resource restriction indication corresponding to the N CSI-RS resources.

In embodiments of the disclosure, the terminal receives the first configuration information, the first configuration information may be used to configure the at least one CMR, and the at least one CMR may include the N CSI-RS resources. In an example, each CMR of the at least one CMR includes the N CSI-RS resources, where N is a positive integer.

In embodiments of the disclosure, the terminal further receives the second configuration information, and the second configuration information may be used to indicate the resource restriction indication corresponding to the N CSI-RS resources. The resource restriction indication includes at least one of: a CBSR indication, an amplitude subset restriction indication, or a rank restriction indication.

In the technical solution of embodiments of the disclosure, for a scenario where the network device configures one CMR including the N CSI-RS resources for the terminal and uses the multiple TRPs to provide the service to the terminal, the resource restriction indication for the multiple CSI-RS resources, including the CBSR indication, the amplitude subset restriction indication and/or the rank restriction indication, are proposed, which enhances the CJT capability of the PDSCH.

In embodiments of the disclosure, the resource restriction indication may include the CBSR indication. The CBSR indication may be configured by a CBSR indication bit string. In this case, the second configuration information may include the CBSR indication bit string.

The CBSR indication bit string is used to configure the CBSR indication corresponding to the N CSI-RS resources.

The N CSI-RS resources may correspond to one or N CBSR indications. A bitmap corresponding to the CBSR indication bit string may include multiple bits, and each bit corresponds to one codebook subset indication, which is used to indicate whether each codebook subset is restricted.

FIG. 3 is a flowchart illustrating a method for a CBSR indication according to an exemplary embodiment. As illustrated in FIG. 3, the method for the CBSR indication includes the following.

At block S31, in response to the CBSR indication bit string including a single CBSR indication bit string, the single CBSR indication bit string is used to indicate the same CBSR indication corresponding to the N CSI-RS resources.

In embodiments of the disclosure, the CBSR indication bit string includes the single CBSR indication bit string, and the single CBSR indication bit string is used to indicate the same CBSR indication corresponding to the N CSI-RS resources. That is, the N CSI-RSs corresponds to the same CBSRs, and one CBSR indication bit string is used to configure the CBSR corresponding to the N CSI-RSs.

In one example, when the network device configures one CMR including the N CSI-RS resources for the terminal, one CBSR indication bit string may be used to indicate the CBSR indication corresponding to the N CSI-RS resources. In this way, the N CSI-RS resources correspond to the same CBSR indication bit strings. It may be understood that the same CBSR indication bit string indicates the CBSRs of the N CSI-RSs, that is, the CBSR indication bit strings of the N CSI-RSs are the same. That is to say, for the N CSI-RS resources, restricted codebook subsets are the same.

In embodiments of the disclosure, since a number of ports of each CSI-RS do not exceed 32, for the CBSR indication bit string which is set to use the single CBSR indication bit string to indicate the same CBSR indication corresponding to the N CSI-RS resources, a size of a CBSR indication bit string may reuse a size of a conventional bit string. The size of the conventional bit string may be a size of a bit string used by the CBSR indication of the codebook selected by the above Rel-16 Type II codebook and the above Rel-17 port. For a case where the CSI-RS has different numbers of ports, CBSR indication bit strings with different sizes may be selected.

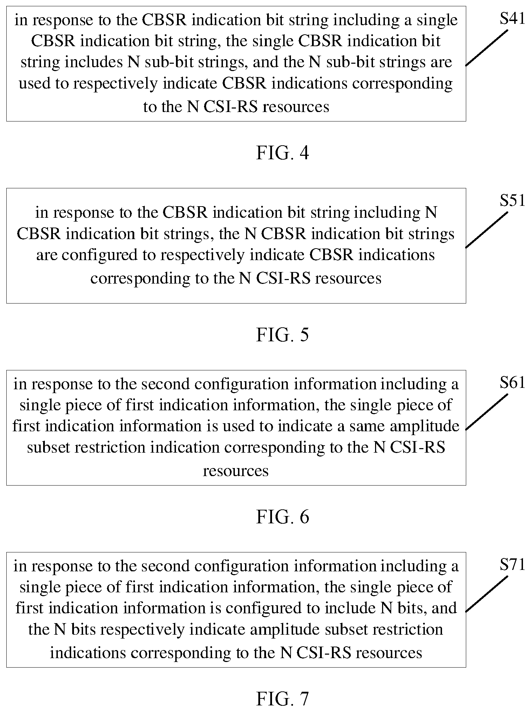

FIG. 4 is a flowchart illustrating a method for a CBSR indication according to an exemplary embodiment. As illustrated in FIG. 4, the method for a CBSR indication includes the following.

At block S41, in response to the CBSR indication bit string including a single CBSR indication bit string, the single CBSR indication bit string includes N sub-bit strings, and the N sub-bit strings are used to respectively indicate CBSR indications corresponding to the N CSI-RS resources.

In embodiments of the disclosure, the CBSR indication bit string may include the single CBSR indication bit string. The single CBSR indication bit string includes N sub-bit strings, and the N sub-bit strings are used to respectively indicate the CBSR indications corresponding to the N CSI-RS resources. It may also be understood that the CBSRs corresponding to the N CSI-RSs are configured independently. Different bits in one CBSR indication bit string are used to configure the CBSRs corresponding to the N CSI-RSs. The CBSR of each CSI-RS in the N CSI-RSs corresponds to some of the bits in the CBSR indication bit string.

In one example, when the network device configures one CMR including the N CSI-RS resources for the terminal, one CBSR indication bit string may be used to indicate the CBSR indications corresponding to the N CSI-RS resources. The CBSR indication bit string may include the N sub-bit strings, such as CBSR indication sub-bit string #0, CBSR indication sub-bit string #1, ..., and CBSR indication sub-bit string #(N-1). In this case, the CBSR indications corresponding to the N CSI-RS resources may be respectively indicated by the CBSR indication sub-bit string #0, the CBSR indication sub-bit string #1, ..., and the CBSR indication sub-bit string #(N-1). Each CBSR indication sub-bit string corresponds to a CBSR indication corresponding to one CSI-RS resource, and the CBSR indications corresponding to the N CSI-RS resources correspond to the same number of bits. That is to say, in the above N CBSR indication sub-bit strings, each CBSR indication sub-bit string has the same number of bits. Further, in the above N CBSR indication sub-bit strings, each CBSR indication bit string may be a continuous part of bits in one CBSR indication bit string, or a discontinuous part of bits in one CBSR indication bit string. That is to say, for the N CSI-RS resources, a restricted codebook subset is configured independently, and restricted codebook subsets of the N CSI-RS resources may be the same or different.

For the CBSR indication bit string set by using different bits in the single CBSR indication bit string to respectively indicate the CBSR indications corresponding to the N CSI-RS resources, when a sum of a number of the ports of the N CSI-RSs is greater than 32, a size of a conventional CBSR indication bit string may not be reused. In this case, a length of a new bit string needs to be re-determined. When the length of the new bit string is re-determined, a CBSR indication bit string corresponding to each CSI-RS resource may be the same or different. The size of the conventional bit string may be the size of the bit string used in the CBSR indication selected by the above Rel-16 Type II codebook and the above Rel-17 port. For a case where the CSI-RS has different numbers of ports, CBSR indication bit strings with different sizes may be selected.

FIG. 5 is a flowchart illustrating a method for a CBSR indication according to an exemplary embodiment. As illustrated in FIG. 5, the method for a CBSR indication includes the following.

At block S51, in response to the CBSR indication bit string including N CBSR indication bit strings, the N CBSR indication bit strings are used to respectively indicate CBSR indications corresponding to the N CSI-RS resources.

In embodiments of the disclosure, the CBSR indication bit string includes the N CBSR indication bit strings, and the N CBSR indication bit strings are used to respectively indicate the CBSR indications corresponding to the N CSI-RS resources. It may also be understood that the CBSRs corresponding to the N CSI-RSs are configured independently. The N CBSR indication bit strings are respectively used to configure the CBSRs corresponding to the N CSI-RSs, and a CBSR of each CSI-RS in the N CSI-RSs corresponds to one CBSR indication bit string.

In one example, when the network device configures one CMR including the N CSI-RS resources for the terminal, the N CBSR indication bit strings may be used to indicate the CBSR indications corresponding to the N CSI-RS resources. For example, the CBSR indications corresponding to the N CSI-RS resources may be respectively indicated by CBSR indication sub-bit string #0, CBSR indication sub-bit string #1, ..., and CBSR indication sub-bit string #(N-1). Each CBSR indication bit string corresponds to a CBSR indication corresponding to one CSI-RS resource, and the CBSR indications of the N CSI-RS resources correspond to the same number of bits. That is to say, in the above N CBSR indication bit strings, each CBSR indication bit string has the same number of bits. Further, there is a one-to-one correspondence between the N CSI-RS resources and the N CBSR indication bit strings, that is to say, each CBSR indication bit string corresponds to one CSI-RS resource. In other words, for the N CSI-RS resources, a restricted codebook subset is configured independently, and restricted codebook subsets of the N CSI-RS resources may be the same or different.

For the CBSR indication bit string set by using the N CBSR indication bit strings to respectively indicate the CBSR indications corresponding to the N CSI-RS resources, a size of each bit string may reuse the size of the conventional bit string. The size of the conventional bit string may be the size of the bit string used in the CBSR indication selected by the above Rel-16 Type II codebook and the above Rel-17 port. For a case where the CSI-RS has different numbers of ports, CBSR indication bit strings with different sizes may be selected.

In the embodiments of the disclosure, the second configuration information may be carried in a radio resource control (RRC) signaling and/or a medium access control element (MAC CE) signaling.

In the technical solution of embodiments of the disclosure, for a scenario where the network device configures one CMR including the N CSI-RS resources for the terminal and uses the multiple TRPs to provide the service to the terminal, CBSR indications of a common configuration or an independent configuration for multiple CSI-RS resources are proposed, which further enhances the CJT capability of the PDSCH.

In embodiments of the disclosure, the resource restriction indication may include the amplitude subset restriction indication. The amplitude subset restriction may be configured by the first indication information. In this case, the second configuration information may include the first indication information.

The first indication information is used to indicate amplitude coefficient information supported or unsupported by the N CSI-RS resources.

The N CSI-RS resources may correspond to one or N amplitude subset restriction indications. The N amplitude subset restriction indications may be indicated by N pieces of first indication information or by N bits included in one piece of first indication information.

FIG. 6 is a flowchart illustrating a method for a method for an amplitude subset restriction indication according to an exemplary embodiment. As illustrated in FIG. 6, the method for an amplitude subset restriction indication includes the following.

At block S61, in response to the second configuration information including a single piece of first indication information, the single piece of first indication information is used to indicate the same amplitude subset restriction indication corresponding to the N CSI-RS resources.

In embodiments of the disclosure, the second configuration information includes the single piece of first indication information, and the single piece of first indication information is used to indicate the same amplitude subset restriction indication corresponding to the N CSI-RS resources. It may also be understood that one piece of first indication information is used to configure the amplitude subset restriction indications corresponding to the N CSI-RS resources, and the N CSI-RS resources correspond to the same amplitude subset restriction indications.

In one example, when the network device configures one CMR including the N CSI-RS resources for the terminal, one piece of first indication information may be used to indicate the amplitude subset restriction indications corresponding to the N CSI-RS resources. In this case, the amplitude subset restriction indications corresponding to the N CSI-RS resources are the same. That is to say, if the first indication information indicates "support", all N CSI-RS resources support an amplitude subset restriction. If the first indication information indicates "not support", none of the N CSI-RS resources support the amplitude subset restriction.

FIG. 7 is a flowchart illustrating a method for a method for an amplitude subset restriction indication according to an exemplary embodiment. As illustrated in FIG. 7, the method for an amplitude subset restriction indication includes the following.

At block S71, in response to the second configuration information including a single piece of first indication information, the single piece of first indication information includes N bits, and the N bits respectively indicate amplitude subset restriction indications corresponding to the N CSI-RS resources.

In embodiments of the disclosure, the second configuration information includes the single piece of first indication information, the single piece of first indication information includes the N bits, and the N bits respectively indicate the amplitude subset restriction indications corresponding to the N CSI-RS resources. It may also be understood that the amplitude subset restrictions corresponding to the N CSI-RS resources are configured independently. One piece of first indication information is used to configure the amplitude subset restriction indications corresponding to the N CSI-RS resources. The piece of first indication information may be a bit string, which includes at least N bits. The N bits in the bit string are used to respectively configure the amplitude subset restriction indications corresponding to the N CSI-RS resources. Each CSI-RS resource corresponds to 1 bit in the bit string.

In one example, when the network device configures one CMR including the N CSI-RS resources for the terminal, the N bits in one piece of first indication information that includes at least N bits may be used. For example, bit0, bit1, ..., and bit(N-1) in the first indication information are used to respectively indicate the amplitude subset restriction indications corresponding to the N CSI-RS resources. That is to say, amplitude subset restrictions corresponding to different CSI-RS resources are configured independently, and the amplitude subset restrictions corresponding to different CSI-RS resources may be the same or different.

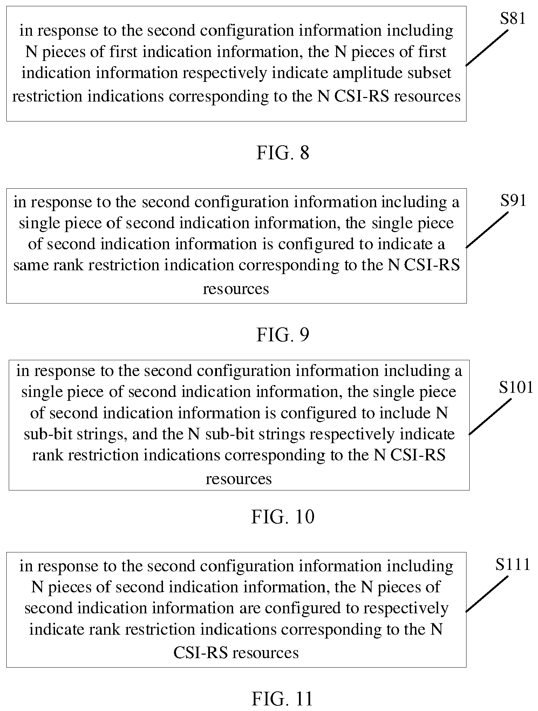

FIG. 8 is a flowchart illustrating a method for an amplitude subset restriction indication according to an exemplary embodiment. As illustrated in FIG. 8, the method for the amplitude subset restriction indication includes the following.

At block S81, in response to the second configuration information including N pieces of first indication information, the N pieces of first indication information respectively indicate amplitude subset restriction indications corresponding to the N CSI-RS resources.

In embodiments of the disclosure, the second configuration information includes the N pieces of first indication information, and the N pieces of first indication information respectively indicate the amplitude subset restriction indications corresponding to the N CSI-RS resources. It may also be understood that the amplitude subset restriction indications corresponding to the N CSI-RS resources are configured independently. The N pieces of first indication information are used to respectively configure the amplitude subset restriction indications corresponding to the N CSI-RS resources. Each CSI-RS resource corresponds to one piece of first indication information.

In one example, when the network device configures one CMR including the N CSI-RS resources for the terminal, the N pieces of first indication information may be used to respectively indicate the amplitude subset restriction indications corresponding to the N CSI-RS resources. For example, first indication information #0, first indication information #1, ..., and first indication information #(N-1) may be used to respectively indicate the amplitude subset restriction indications corresponding to the N CSI-RS resources. That is to say, amplitude subset restrictions corresponding to different CSI-RS resources are configured independently, and the amplitude subset restrictions corresponding to different CSI-RS resources may be the same or different.

In the embodiments of the disclosure, the second configuration information and the first indication information may be carried in the same or different RRC signaling and/or the same or different MAC CE signaling.

**In** the technical solution of embodiments of the disclosure, for a scenario where the network device configures one CMR including the N CSI-RS resources for the terminal and uses the multiple TRPs to provide the service to the terminal, amplitude subset restriction indications of a common configuration or an independent configuration for the multiple CSI-RS resources are proposed, which further enhances the CJT capability of the PDSCH.

In embodiments of the disclosure, the resource restriction indication may include the rank restriction indication. A rank restriction may be configured by the second indication information. In this case, the second configuration information may include the second indication information.

The second configuration information is configured to indicate rank information supported or unsupported by the N CSI-RS resources.

The N CSI-RS resources may correspond to one or N rank restriction indications. The N rank restriction indications may be indicated by N pieces of second indication information or by N bits included in one piece of second indication information.

FIG. 9 is a flowchart illustrating a method for a rank restriction indication according to an exemplary embodiment. As illustrated in FIG. 9, the method for a rank restriction indication includes the following.

At block S91, in response to the second configuration information including a single piece of second indication information, the single piece of second indication information is used to indicate the same rank restriction indication corresponding to the N CSI-RS resources.

In embodiments of the disclosure, the second configuration information includes the single piece of second indication information, and the single piece of second indication information is used to indicate the same rank restriction indication corresponding to the N CSI-RS resources. It may also be understood that one piece of second indication information is used to configure the rank restriction indications corresponding to the N CSI-RS resources, and the N CSI-RS resources correspond to are the same rank restriction indications.

In one example, when the network device configures one CMR including the N CSI-RS resources for the terminal, one piece of second indication information may be used to indicate the rank restriction indications corresponding to the N CSI-RS resources. In this case, the rank restriction indications corresponding to the N CSI-RS resources are the same. That is to say, if the first indication information indicates to support that ranks are 1 and 2, ranks supported by the N CSI-RS resources only include 1 and 2; if the first indication information indicates to support that ranks are 1, 2, 3, and 4, ranks supported by the N CSI-RS resources only include 1, 2, 3, and 4.

FIG. 10 is a flowchart illustrating a method for a rank restriction indication according to an exemplary embodiment. As illustrated in FIG. 10, the method for the rank restriction indication includes the following.

At block S101, in response to the second configuration information including a single piece of second indication information, the single piece of second indication information includes N sub-bit strings, and the N sub-bit strings respectively indicate rank restriction indications corresponding to the N CSI-RS resources.

In embodiments of the disclosure, the second configuration information includes the single piece of second indication information, the single piece of second indication information includes the N sub-bit strings, and the N sub-bit strings respectively indicate the rank restriction indications corresponding to the N CSI-RS resources. It may also be understood that the rank restriction indications corresponding to the N CSI-RS resources are configured independently. One piece of second indication information is used to configure the rank restriction indications corresponding to the N CSI-RS resources. The piece of second indication information may be a bit string, which includes at least N sub-bit strings. N sub-bit strings in the bit string are used to respectively configure the rank restriction indications corresponding to the N CSI-RS resources. Each CSI-RS resource corresponds to 1 sub-bit string in the bit string.

In one example, when the network device configures one CMR including the N CSI-RS resources for the terminal, the N sub-bit strings in one piece of second indication information that includes at least N bits may be used. For example, sub-bit string 0, sub-bit string 1, ..., and sub-bit string (N-1) in the second indication information are used to respectively indicate the rank restriction indications corresponding to the N CSI-RS resources.

FIG. 11 is a flowchart illustrating a method for a rank restriction indication according to an exemplary embodiment. As illustrated in FIG. 11, the method for the rank restriction indication includes the following.

At block S111, in response to the second configuration information includes N pieces of second indication information, the N pieces of second indication information respectively indicates rank restriction indications corresponding to the N CSI-RS resources.

In embodiments of the disclosure, the second configuration information includes the N pieces of second indication information, and the N pieces of second indication information respectively indicates the rank restriction indications corresponding to the N CSI-RS resources. It may also be understood that the rank restriction indications corresponding to the N CSI-RS resources are configured independently. The N pieces of second indication information are used to respectively configure the rank restriction indications corresponding to the N CSI-RS resources. Each CSI-RS resource corresponds to one piece of second indication information.

In one example, when the network device configures one CMR including the N CSI-RS resources for the terminal, the N pieces of second indication information may be used to respectively indicate the rank restriction indications corresponding to the N CSI-RS resources. For example, second indication information #0, second indication information #1, ..., and second indication information #(N-1) may be used to respectively indicate the rank restriction indications corresponding to the N CSI-RS resources. Each second indication information includes one bit string.

In the embodiments of the disclosure, the second configuration information and the second indication information may be carried in the same or different RRC signaling and/or the same or different MAC CE signaling.

In the technical solution of the embodiments of the disclosure, for a scenario where the network device configures one CMR including the N CSI-RS resources for the terminal and uses the multiple TRPs to provide the service to the terminal, rank restriction indications of a common configuration or an independent configuration for multiple CSI-RS resources are proposed, which further enhances the CJT capability of the PDSCH.

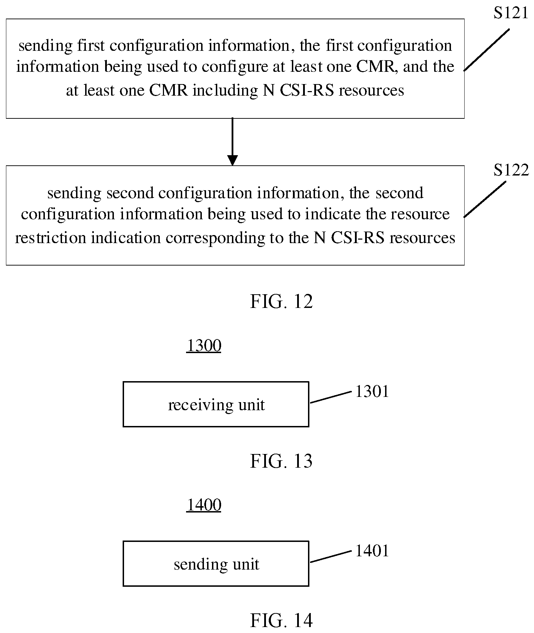

FIG. 12 is a flowchart illustrating a method for a resource restriction indication according to an exemplary embodiment. The method for the resource restriction indication is applied to the network device. As illustrated in FIG. 12, the method for a resource restriction indication includes the following.

At block S121, first configuration information is sent, the first configuration information is used to configure at least one CMR, and the at least one CMR includes N CSI-RS resources.

N is a positive integer.

At block S122, second configuration information is sent, the second configuration information is used to indicate the resource restriction indication corresponding to the N CSI-RS resources.

In embodiments of the disclosure, the network device sends the first configuration information. The first configuration information may be used to configure the at least one CMR, and the at least one CMR includes the N CSI-RS resources. In one example, each CMR of the at least one CMR includes the N CSI-RS resources, where N is a positive integer.

In embodiments of the disclosure, the network device also sends the second configuration information. The second configuration information is used to indicate the resource restriction indication corresponding to the N CSI-RS resources. The resource restriction indication includes at least one of: a CBSR indication, an amplitude subset restriction indication, or a rank restriction indication.

In the technical solution of embodiments of the disclosure, for a scenario where the network device configures one CMR including the N CSI-RS resources for the terminal and uses the multiple TRPs to provide the service to the terminal, the resource restriction indications for the multiple CSI-RS resources, including the CBSR indication, the amplitude subset restriction indication and/or the rank restriction indication, are proposed, which enhances the CJT capability of the PDSCH.

In embodiments of the disclosure, the resource restriction indication may include the CBSR indication. The CBSR indication may be configured by a CBSR indication bit string. In this case, the second configuration information may include the CBSR indication bit string.

The CBSR indication bit string is used to configure the CBSR indication corresponding to the N CSI-RS resources.

The N CSI-RS resources may correspond to one or N CBSR indications. A bitmap corresponding to the CBSR indication bit string may include multiple bits, and each bit corresponds to one codebook subset indication, which is used to indicate whether each codebook subset is restricted.

In embodiments of the disclosure, the CBSR indication bit string includes the single CBSR indication bit string, and the single CBSR indication bit string is used to indicate the same CBSR indication corresponding to the N CSI-RS resources.

In one example, when the network device configures one CMR including the N CSI-RS resources for the terminal, one CBSR indication bit string may be used to indicate the CBSR indication corresponding to the N CSI-RS resources. In this way, the N CSI-RS resources correspond to the same CBSR indication bit string. It may be understood that the same CBSR indication bit string is used to indicate the CBSRs of the N CSI-RSs, that is, the CBSR indication bit strings of the N CSI-RSs are the same. That is to say, for the N CSI-RS resources, restricted codebook subsets are the same.

In embodiments of the disclosure, since a number of ports of each CSI-RS do not exceed 32, for the CBSR indication bit string which is set to use the single CBSR indication bit string to indicate the same CBSR indication corresponding to the N CSI-RS resources, a size of a bit string may reuse a size of a conventional bit string. The size of the conventional bit string may be a size of a bit string used by the CBSR indication of the codebook selected by the above Rel-16 Type II codebook and the above Rel-17 port. For a case where the CSI-RS has different numbers of ports, CBSR indication bit strings with different sizes may be selected.

In embodiments of the disclosure, the CBSR indication bit string includes the single CBSR indication bit string. The single CBSR indication bit string includes N sub-bit strings, and the N sub-bit strings are used to respectively indicate CBSR indications corresponding to the N CSI-RS resources. It may also be understood that the CBSRs corresponding to the N CSI-RSs are configured independently. Different bits in one CBSR indication bit string are used to configure the CBSRs corresponding to the N CSI-RSs. The CBSR of each CSI-RS in the N CSI-RSs corresponds to some of the bits in the CBSR indication bit string.

In one example, when the network device configures one CMR including the N CSI-RS resources for the terminal, one CBSR indication bit string may be used to indicate the CBSR indications corresponding to the N CSI-RS resources. The CBSR indication bit string may include the N sub-bit strings, such as CBSR indication sub-bit string #0, CBSR indication sub-bit string #1, ..., and CBSR indication sub-bit string #(N-1). In this case, the CBSR indications corresponding to the N CSI-RS resources may be respectively indicated by the CBSR indication sub-bit string #0, the CBSR indication sub-bit string #1, ..., and the CBSR indication sub-bit string #(N-1). Each CBSR indication sub-bit string corresponds to a CBSR indication corresponding to one CSI-RS resource, and the CBSR indications corresponding to the N CSI-RS resources correspond to the same number of bits. That is to say, in the above N CBSR indication sub-bit strings, each CBSR indication sub-bit string has the same number of bits. Further, in the above N CBSR indication sub-bit strings, each CBSR indication bit string may be a continuous part of bits in one CBSR indication bit string, or a discontinuous part of bits in one CBSR indication bit string. That is to say, for the N CSI-RS resources, a restricted codebook subset is configured independently, and restricted codebook subsets of the N CSI-RS resources may be the same or different.

For the CBSR indication bit string set by using different bits in the single CBSR indication bit string to respectively indicate the CBSR indications corresponding to the N CSI-RS resources, when a sum of a number of the ports of the N CSI-RSs is greater than 32, a size of a conventional CBSR indication bit string may not be reused. In this case, a length of a new bit string needs to be re-determined. When the length of the new bit string is re-determined, a CBSR indication bit string corresponding to each CSI-RS resource may be the same or different. The size of the conventional bit string may be the size of the bit string used in the CBSR indication selected by the above Rel-16 Type II codebook and the above Rel-17 port. For a case where the CSI-RS has different numbers of ports, CBSR indication bit strings with different sizes may be selected.

In embodiments of the disclosure, the CBSR indication bit string includes the N CBSR indication bit strings, and the N CBSR indication bit strings are used to respectively indicate the CBSR indications corresponding to the N CSI-RS resources. It may also be understood that the CBSRs corresponding to the N CSI-RSs are configured independently. The N CBSR indication bit strings are respectively used to configure the CBSRs corresponding to the N CSI-RSs, and a CBSR of each CSI-RS in the N CSI-RSs corresponds to one CBSR indication bit string.

In one example, when the network device configures one CMR including the N CSI-RS resources for the terminal, the N CBSR indication bit strings may be used to indicate the CBSR indications corresponding to the N CSI-RS resources. For example, the CBSR indications corresponding to the N CSI-RS resources may be respectively indicated by CBSR indication sub-bit string #0, CBSR indication sub-bit string #1, ..., and CBSR indication sub-bit string #(N-1). Each CBSR indication bit string corresponds to a CBSR indication corresponding to one CSI-RS resource, and the CBSR indications of the N CSI-RS resources correspond to the same number of bits. That is to say, in the above N CBSR indication bit strings, each CBSR indication bit string has the same number of bits. Further, there is a one-to-one correspondence between the N CSI-RS resources and the N CBSR indication bit strings, that is to say, each CBSR indication bit string corresponds to one CSI-RS resource. In other words, for the N CSI-RS resources, a restricted codebook subset is configured independently, and restricted codebook subsets of the N CSI-RS resources may be the same or different.

For the CBSR indication bit string set by using the N CBSR indication bit strings to respectively indicate the CBSR indications corresponding to the N CSI-RS resources, a size of each bit string may reuse the size of the conventional bit string. The size of the conventional bit string may be the size of the bit string used in the CBSR indication selected by the above Rel-16 Type II codebook and the above Rel-17 port. For a case where the CSI-RS has different numbers of ports, CBSR indication bit strings with different sizes may be selected.

In the embodiments of the disclosure, the second configuration information may be carried in an RRC signaling and/or an MAC CE signaling.

In a technical solution of embodiments of the disclosure, for a scenario where the network device configures one CMR including the N CSI-RS resources for the terminal and uses the multiple TRPs to provide the service to the terminal, CBSR indications of a common configuration or an independent configuration for multiple CSI-RS resources are proposed, which further enhances a CJT capability of a PDSCH.

In embodiments of the disclosure, the resource restriction indication may include the amplitude subset restriction indication. The amplitude subset restriction may be configured by first indication information. In this case, the second configuration information may include the first indication information.

The first indication information is used to indicate amplitude coefficient information supported or unsupported by the N CSI-RS resources.

The N CSI-RS resources may correspond to one or N amplitude subset restriction indications. The N amplitude subset restriction indications may be indicated by N pieces of first indication information or by N bits included in one piece of first indication information.

In embodiments of the disclosure, the second configuration information includes the single piece of first indication information, and the single piece of first indication information is used to indicate the same amplitude subset restriction indication corresponding to the N CSI-RS resources. It may also be understood that one piece of first indication information is used to configure the amplitude subset restriction indications corresponding to the N CSI-RS resources, and the N CSI-RS resources correspond to the same amplitude subset restriction indications.

In one example, when the network device configures one CMR including the N CSI-RS resources for the terminal, one piece of first indication information may be used to indicate the amplitude subset restriction indications corresponding to the N CSI-RS resources. In this case, the amplitude subset restriction indications corresponding to the N CSI-RS resources are the same. That is to say, if the first indication information indicates "support", all N CSI-RS resources support an amplitude subset restriction. If the first indication information indicates "not support", none of the N CSI-RS resources support the amplitude subset restriction.

In embodiments of the disclosure, the second configuration information includes the single piece of first indication information, the single piece of first indication information includes the N bits, and the N bits respectively indicate the amplitude subset restriction indications corresponding to the N CSI-RS resources. It may also be understood that the amplitude subset restrictions corresponding to the N CSI-RS resources are configured independently. One piece of first indication information is used to configure the amplitude subset restriction indications corresponding to the N CSI-RS resources. The piece of first indication information may be a bit string, which includes at least N bits. The N bits in the bit string are used to respectively configure the amplitude subset restriction indications corresponding to the N CSI-RS resources. Each CSI-RS resource corresponds to 1 bit in the bit string.

In one example, when the network device configures one CMR including the N CSI-RS resources for the terminal, the N bits in one piece of first indication information that includes at least N bits may be used. For example, bit0, bit1, ..., and bit(N-1) in the first indication information are used to respectively indicate the amplitude subset restriction indications corresponding to the N CSI-RS resources. That is to say, amplitude subset restrictions corresponding to different CSI-RS resources are configured independently, and codebook subsets restricted by the N CSI-RS resources may be the same or different.

In embodiments of the disclosure, the second configuration information includes the N pieces of first indication information, and the N pieces of first indication information respectively indicate the amplitude subset restriction indications corresponding to the N CSI-RS resources. It may also be understood that the amplitude subset restriction indications corresponding to the N CSI-RS resources are configured independently. The N pieces of first indication information are used to respectively configure the amplitude subset restriction indications corresponding to the N CSI-RS resources. Each CSI-RS resource corresponds to one piece of first indication information.

In one example, when the network device configures one CMR including the N CSI-RS resources for the terminal, the N pieces of first indication information may be used to respectively indicate the amplitude subset restriction indications corresponding to the N CSI-RS resources. For example, first indication information #0, first indication information #1, ..., and first indication information #(N-1) may be used to respectively indicate the amplitude subset restriction indications corresponding to the N CSI-RS resources. That is to say, amplitude subset restrictions corresponding to different CSI-RS resources are configured independently, and restricted codebook subsets of the N CSI-RS resources may be the same or different.

In the embodiments of the disclosure, the second configuration information and the first indication information may be carried in the same or different RRC signaling and/or the same or different MAC CE signaling.

In the technical solution of embodiments of the disclosure, for a scenario where the network device configures one CMR including the N CSI-RS resources for the terminal and uses the multiple TRPs to provide the service to the terminal, amplitude subset restriction indications of a common configuration or an independent configuration for the multiple CSI-RS resources are proposed, which further enhances the CJT capability of the PDSCH.

In embodiments of the disclosure, the resource restriction indication may include the rank restriction indication. A rank restriction may be configured by the second indication information. In this case, the second configuration information may include the second indication information.

The second configuration information is configured to indicate rank information supported or unsupported by the N CSI-RS resources.

The N CSI-RS resources may correspond to one or N rank restriction indications. The N rank restriction indications may be indicated by N pieces of second indication information or by N bits included in one piece of second indication information.

In embodiments of the disclosure, the second configuration information includes the single piece of second indication information, and the single piece of second indication information is used to indicate the same rank restriction indication corresponding to the N CSI-RS resources. It may also be understood that one piece of second indication information is used to configure the rank restriction indications corresponding to the N CSI-RS resources, and the N CSI-RS resources correspond to are the same rank restriction indications.

In one example, when the network device configures one CMR including the N CSI-RS resources for the terminal, one piece of second indication information may be used to indicate the rank restriction indications corresponding to the N CSI-RS resources. In this case, the rank restriction indications corresponding to the N CSI-RS resources are the same. That is to say, if the first indication information indicates to support that ranks are 1 and 2, ranks supported by the N CSI-RS resources only include 1 and 2; if the first indication information indicates to support that ranks are 1, 2, 3, and 4, ranks supported by the N CSI-RS resources only include 1, 2, 3, and 4.

In embodiments of the disclosure, the second configuration information may include the single piece of second indication information, the single piece of second indication information includes the N sub-bit strings, and the N sub-bit strings respectively indicate the rank restriction indications corresponding to the N CSI-RS resources. It may also be understood that the rank restriction indications corresponding to the N CSI-RS resources are configured independently. One piece of second indication information is used to configure the rank restriction indications corresponding to the N CSI-RS resources. The piece of second indication information may be a bit string, which includes at least N sub-bit strings. The rank restriction indications corresponding to the N CSI-RS resources are used to configure the N sub-bit strings in the bit string. Each CSI-RS resource corresponds to 1 sub-bit string in the bit string.

In one example, when the network device configures one CMR including the N CSI-RS resources for the terminal, the N sub-bit strings in one piece of second indication information that includes at least N bits may be used. For example, sub-bit string 0, sub-bit string 1, ..., and sub-bit string (N-1) in the second indication information are used to respectively indicate the rank restriction indications corresponding to the N CSI-RS resources.

In embodiments of the disclosure, the second configuration information includes the N pieces of second indication information, and the N pieces of second indication information respectively indicates the rank restriction indications corresponding to the N CSI-RS resources. It may also be understood that the rank restriction indications corresponding to the N CSI-RS resources are configured independently. The N pieces of second indication information are used to respectively configure the rank restriction indications corresponding to the N CSI-RS resources. Each CSI-RS resource corresponds to one piece of second indication information.

In one example, when the network device configures one CMR including the N CSI-RS resources for the terminal, the N pieces of second indication information may be used to respectively indicate the rank restriction indications corresponding to the N CSI-RS resources. For example, second indication information #0, second indication information #1, ..., and second indication information #(N-1) may be used to respectively indicate the rank restriction indications corresponding to the N CSI-RS resources. Each second indication information includes one bit string.

In the embodiments of the disclosure, the second configuration information and the second indication information may be carried in the same or different RRC signaling and/or the same or different MAC CE signaling.

In the technical solution of the embodiments of the disclosure, for a scenario where the network device configures one CMR including the N CSI-RS resources for the terminal and uses the multiple TRPs to provide the service to the terminal, rank restriction indications of a common configuration or an independent configuration for multiple CSI-RS resources are proposed, which further enhances the CJT capability of the PDSCH.

**It** may be understood that a technical implementation related to a process of performing the resource restriction indication by the network device in the embodiments of the disclosure may be applied to a process of performing the resource restriction indication by the terminal in the embodiments of the disclosure. Therefore, for some technical implementations of the process of performing the resource restriction indication by the network device that are not described in detail, please refer to a relevant description in an implementation process of performing the resource restriction indication by the terminal, which is not repeated here.

It may be understood that the method for the resource restriction indication provided by the embodiments of the disclosure is applicable to a process of realizing the resource restriction indication in an interaction process between the terminal and the network device. A process of performing the resource restriction indication by an interaction between the terminal and the network device is not described in detail in the embodiments of the disclosure.

It needs to be noted that those skilled in the art may understand that various implementations/embodiments mentioned above in the embodiments of the disclosure may be used in conjunction with the above embodiments or be used independently. Whether used independently or in combination with the above embodiments, an implementation principle is similar. In implementations of the disclosure, some embodiments are described via implementations that used together. Of course, those skilled in the art may understand that such examples do not limit the embodiments of the disclosure.

Based on the same concept, embodiments of the disclosure also provide an apparatus for a resource restriction indication.

It may be understood that, in order to achieve the above functions, the apparatus for the resource restriction indication provided by embodiments of the disclosure includes a corresponding hardware structure and/or software module for performing each function. The units and algorithmic steps of various examples described in combination with embodiments disclosed herein are capable of being implemented in the form of hardware, or a combination of computer software and hardware. Whether these functions are performed in the form of hardware or hardware driven by computer software depends on the specific application and design constraints of the technical solution. Those skilled in the art may use different methods to implement the described functions for each specific application, but such implementations should not be considered as beyond the scope of the disclosure.

FIG. 13 is a block diagram illustrating an apparatus for a resource restriction indication according to an exemplary embodiment. Referring to FIG. 13, the apparatus 1300 includes a receiving unit 1301.

The receiving unit 1301 is configured to receive first configuration information. The first configuration information is used to configure at least one CMR, and the at least one CMR includes N CSI-RS resources, where N is a positive integer.

The receiving unit 1301 is further configured to receive second configuration information. The second configuration information is used to indicate the resource restriction indication corresponding to the N CSI-RS resources.

In embodiments of the disclosure, the resource restriction indication includes at least one of: a CBSR indication, an amplitude subset restriction indication, or a rank restriction indication.

In embodiments of the disclosure, the resource restriction indication includes the CBSR indication; and the second configuration information includes a CBSR indication bit string, and the CBSR bit string is used to configure the CBSR indication corresponding to the N CSI-RS resources.

In embodiments of the disclosure, the CBSR indication bit string includes a single CBSR indication bit string.

In embodiments of the disclosure, the single CBSR indication bit string is used to indicate the same CBSR indication corresponding to the N CSI-RS resources.

In embodiments of the disclosure, the single CBSR indication bit string includes N sub-bit strings, and the N sub-bit strings are used to respectively indicate CBSR indications corresponding to the N CSI-RS resources.

In embodiments of the disclosure, the CBSR indication bit string includes N CBSR indication bit strings, and the N CBSR indication bit strings are used to respectively indicate CBSR indications corresponding to the N CSI-RS resources.

In embodiments of the disclosure, the CBSR indications corresponding to the N CSI-RS resources correspond to the same number of bits.

In embodiments of the disclosure, each sub-bit string in the N sub-bit strings includes consecutive or non-consecutive bits in the single CBSR indication bit string.

In embodiments of the disclosure, there is a one-to-one correspondence between the N CSI-RS resources and the N CBSR indication bit strings.

In embodiments of the disclosure, the resource restriction indication includes the amplitude subset restriction indication; and the second configuration information includes first indication information, and the first indication information is used to indicate amplitude coefficient information supported or unsupported by the N CSI-RS resources.

In embodiments of the disclosure, the second configuration information includes a single piece of first indication information.

In embodiments of the disclosure, the single piece of first indication information is used to indicate the same amplitude subset restriction indication corresponding to the N CSI-RS resources.

In embodiments of the disclosure, the single piece of first indication information includes N bits, and the N bits respectively indicate amplitude subset restriction indications corresponding to the N CSI-RS resources.

In embodiments of the disclosure, the second configuration information includes N pieces of first indication information, and the N pieces of first indication information respectively indicate amplitude subset restriction indications corresponding to the N CSI-RS resources.

In embodiments of the disclosure, the resource restriction indication includes the rank restriction indication; and the second configuration information includes second indication information, and the second indication information is used to indicate rank information supported or unsupported by the N CSI-RS resources.

In embodiments of the disclosure, the second configuration information includes a single piece of second indication information.

In embodiments of the disclosure, the single piece of second indication information is used to indicate the same rank restriction indication corresponding to the N CSI-RS resources.

In embodiments of the disclosure, the single piece of second indication information includes N sub-bit strings, and the N sub-bit strings respectively indicate rank restriction indications corresponding to the N CSI-RS resources.

In embodiments of the disclosure, the second configuration information includes N pieces of second indication information, and the N pieces of second indication information respectively indicates rank restriction indications corresponding to the N CSI-RS resources.

In the technical solution of the embodiments of the disclosure, for a scenario where the network device configures one CMR including the N CSI-RS resources for the terminal and uses the multiple TRPs to provide the service to the terminal, the CBSR indication, the amplitude subset restriction indication and/or the rank restriction indication of a common configuration or an independent configuration for the multiple CSI-RS resources are proposed, which further enhances the CJT capability of the PDSCH.

FIG. 14 is a block diagram illustrating an apparatus for a resource restriction indication according to an exemplary embodiment. Referring to FIG. 14, the apparatus 1400 includes a sending unit 1401.

The sending unit 1401 is configured to send first configuration information. The first configuration information is used to configure at least one CMR, and the at least one CMR includes N CSI-RS resources, where N is a positive integer.

The sending unit 1401 is further configured to send second configuration information. The second configuration information is used to indicate the resource restriction indication corresponding to the N CSI-RS resources.

In embodiments of the disclosure, the resource restriction indication includes at least one of: a CBSR indication, an amplitude subset restriction indication, or a rank restriction indication.

In embodiments of the disclosure, the resource restriction indication includes the CBSR indication; the second configuration information includes a CBSR indication bit string, and the CBSR bit string is used to configure the CBSR indication corresponding to the N CSI-RS resources.

In embodiments of the disclosure, the CBSR indication bit string includes a single CBSR indication bit string.

In embodiments of the disclosure, the single CBSR indication bit string is used to indicate the same CBSR indication corresponding to the N CSI-RS resources.

In embodiments of the disclosure, the single CBSR indication bit string includes N sub-bit strings, and the N sub-bit strings are used to respectively indicate CBSR indications corresponding to the N CSI-RS resources.

In embodiments of the disclosure, the CBSR indication bit string includes N CBSR indication bit strings, and the N CBSR indication bit strings are used to respectively indicate CBSR indications corresponding to the N CSI-RS resources.

In embodiments of the disclosure, the CBSR indications corresponding to the N CSI-RS resources correspond to the same number of bits.

In embodiments of the disclosure, each sub-bit string in the N sub-bit strings includes consecutive or non-consecutive bits in the single CBSR indication bit string.

In embodiments of the disclosure, there is a one-to-one correspondence between the N CSI-RS resources and the N CBSR indication bit strings.

In embodiments of the disclosure, the resource restriction indication includes the amplitude subset restriction indication; the second configuration information includes first indication information, and the first indication information is used to indicate amplitude coefficient information supported or unsupported by the N CSI-RS resources.

In embodiments of the disclosure, the second configuration information includes a single piece of first indication information.

In embodiments of the disclosure, the single piece of first indication information is used to indicate the same amplitude subset restriction indication corresponding to the N CSI-RS resources.

In embodiments *of the disclosure, the single piece* of first indication information includes N bits, and the N bits respectively indicate amplitude subset restriction indications corresponding to the N CSI-RS resources.

In embodiments of the disclosure, the second configuration information includes N pieces of first indication information, and the N pieces of first indication information respectively indicate amplitude subset restriction indications corresponding to the N CSI-RS resources.

In embodiments of the disclosure, the resource restriction indication includes the rank restriction indication; the second configuration information includes second indication information, and the second indication information is used to indicate rank information supported or unsupported by the N CSI-RS resources.

In embodiments of the disclosure, the second configuration information includes a single piece of second indication information.

In embodiments of the disclosure, the single piece of second indication information is used to indicate the same rank restriction indication corresponding to the N CSI-RS resources.

In embodiments of the disclosure, the single piece of second indication information includes N sub-bit strings, and the N sub-bit strings respectively indicate rank restriction indications corresponding to the N CSI-RS resources.

In embodiments of the disclosure, the second configuration information includes N pieces of second indication information, and the N pieces of second indication information respectively indicates rank restriction indications corresponding to the N CSI-RS resources.

In the technical solution of the embodiments of the disclosure, for a scenario where the network device configures one CMR including the N CSI-RS resources for the terminal and uses the multiple TRPs to provide the service to the terminal, the CBSR indication, the amplitude subset restriction indication and/or the rank restriction indication of a common configuration or an independent configuration for the multiple CSI-RS resources are proposed, which further enhances the CJT capability of the PDSCH.

With respect to the apparatus in the above embodiments, detailed implementations in which each module performs an operation has been described in detail in the method embodiments, which is not repeated here.

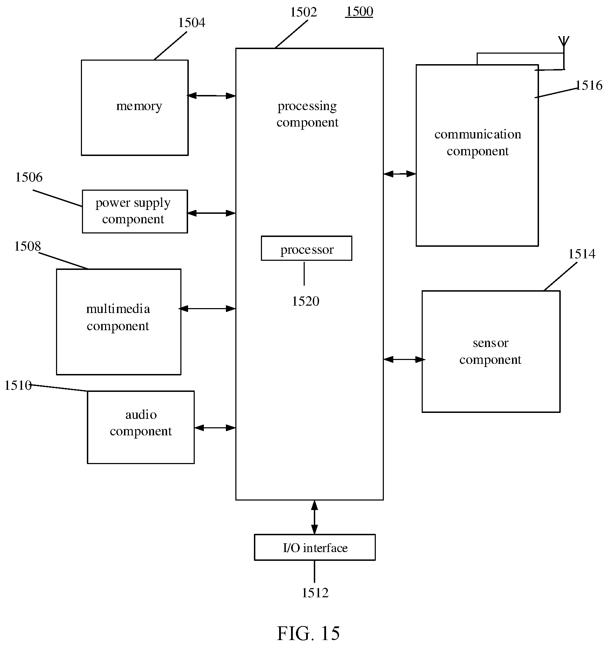

FIG. 15 is a block diagram illustrating a device 1500 for a resource restriction indication 1500 according to an exemplary embodiment. The device 1500 may be a mobile phone, a computer, a digital broadcast terminal, a message transceiver device, a game console, a tablet, a medical device, a fitness device, a personal digital assistant, etc.

Referring to FIG. 15, the device 1500 may include one or more processing components 1502, memories 1504, power supply modules 1506, multimedia components 1508, audio components 1510, input/output (I/O) interfaces 1512, sensor components 1514, and communication components 1516.

The processing component 1502 typically controls the overall operation of the device 1500, such as those associated with a display, a telephone call, a data communication, a camera operation, and a recording operation. The processing component 1502 may include one or more processors 1520 to execute instructions to generate all or some of steps of the above methods. In addition, the processing component 1502 may include one or more modules to facilitate the interaction between the processing component 1502 and other components. For example, the processing component 1502 may include a multimedia module to facilitate the interaction between the multimedia component 1508 and the processing component 1502.

The memory 1504 is configured to store various types of data to support operations on the device 1500. Examples of these data include instructions of any application or method used to operate on the device 1500, contact data, phone book data, messages, pictures, videos, etc. The memory 1504 may be implemented by any type of volatile or non-volatile memory or a combination of them, such as a static random-access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk or CD.

The power supply module 1506 provides power to the various components of the device 1500. The power supply module 1506 may include a power management system, one or more power supplies, and other components associated with generating, managing, and distributing power for the device 1500.

The multimedia component 1508 includes a screen that provides an output interface between the device 1500 and the user. In some embodiments, the screen may include a liquid crystal display (LCD) and a touch panel (TP). If the screen includes a touch plane, the screen may be a touch screen to receive signals input by the user. The touch panel includes one or more touch sensors to sense a touch, swiping, and gesture on the touch panel. The touch sensor may not only sense the boundary of a touch or sliding action, but also detect the duration and pressure associated with the touch or sliding operation. In some embodiments, the multimedia component 1508 includes a front camera and/or a rear camera. When the device 1500 is in an operating mode, such as a shooting mode or a video mode, the front camera and/or the rear camera may receive external multimedia data. Each front camera or each rear camera may be a fixed optical lens system or has a focal length and an optical zoom capability.

The audio component 1510 is configured to output and/or input audio signals. For example, the audio component 1510 includes a microphone (MIC) that is configured to receive external audio signals when the device 1500 is in an operational mode, such as a call mode, a recording mode, and a speech recognition mode. The received audio signal may be further stored in the memory 1504 or sent via a communication component 1516. In some embodiments, the audio component 1510 also includes a speaker for the output of an audio signal.

The I/O interface 1512 provides an interface between the processing component 1502 and a peripheral interface module. The peripheral interface module may be a keyboard, a click wheel, a button, etc. The button may include, but is not limited to: a home button, a volume button, a start button, and a locking button.

The sensor component 1514 includes one or more sensors to provide a state assessment of various aspects of the device 1500. For example, the sensor component 1514 may detect an on/off state of the device 1500, and a relative positioning of the component. For example, the component is a display and a keypad of the device 1500, the sensor component 1514 may also detect a change of the position of the device 1500 or a change of one component of the device 1500, detect a presence or an absence of a contact between the user and with the device 1500, detect a direction of the device 1500, or detect an acceleration/deceleration and detect a temperature change of the device 1500. The sensor component 1514 may include a proximity sensor configured to detect the presence of nearby objects without any physical contact. The sensor component 1514 may also include an optical sensor, such as a CMOS or CCD image sensor, for using in an imaging application. In some embodiments, the sensor component 1514 may also include an acceleration sensor, a gyroscope sensor, a magnetic sensor, a pressure sensor, or a temperature sensor.

The communication component 1516 is configured to facilitate a wired or wireless communication between the device 1500 and other devices. The device 1500 may access a wireless network based on a communication standard, such as WiFi, 2G or 3G, or a combination of them. In an exemplary embodiment, the communication component 1516 receives a broadcast signal or broadcast-related information from an external broadcast management system by a broadcast channel. In an exemplary embodiment, the communication component 1516 also includes a near-field communication (NFC) module to facilitate a short-range communication. For example, the NFC module may be implemented based on a radio frequency identification (RFID) technology, an infrared data association (IrDA) technology, an ultra-wide band (UWB) technology, a bluetooth (BT) technology and other technologies.

In exemplary embodiments, the device 1500 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors, or other electronic components to perform the above methods.

In exemplary embodiments, a non-transitory computer readable storage medium including instructions is also provided, such as a memory 1504 including instructions. The instructions may be executed by the processor 1520 of the device 1500 to implement the above methods. For example, the non-transitory computer readable storage medium may be a read-only memory (ROM), a random access memory (RAM), a compact disc read-only memory (CD-ROM), a magnetic tape, a floppy disk, and an optical data storage device.

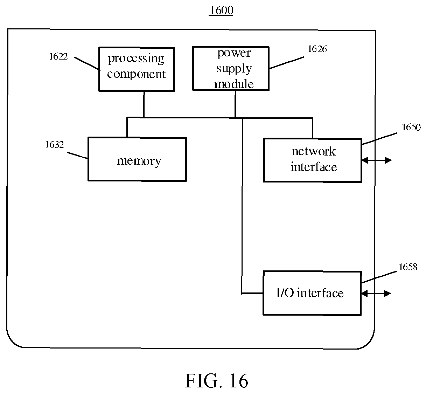

FIG. 16 is a block diagram of a device 1600 for a resource restriction indication according to an exemplary embodiment. The device 1600 may be provided as a server. Referring to FIG. 16, the device 1600 includes a processing component 1622, which further includes one or more processors, and a memory resource represented by the memory 1632 for storing instructions executable by the processing component 1622, such as an application program. The application program stored in a memory 1632 may include one or more modules, in which each module corresponds to a set of instructions. In addition, the processing component 1622 is configured to execute the instructions, to execute the above method for the resource restriction indication.

The device 1600 may also include a power supply component 1626 configured to perform power management for the device 1600, a wired or wireless network interface 1650 configured to connect the device 1600 to the network, and an I/O interface 1658. The device 1600 may operate an operating system stored on the memory 1632, such as a Windows Server TM, a Mac OS XTM, a UnixTM, a LinuxTM, a FreeBSDTM, and the like.

It may be understood that the term "a plurality of" in the disclosure refers to two or more than two, and other numbers are similar to the term "a plurality of". The term "and/or" describes the relationship between associated objects, indicating that there may be three relationships, for example, A and/or B means A, A and B at the same time, and B. The character "/" generally indicates that the relationship between associated objects is an "or" relationship. The terms "a" and "the" in a singular form also include plural forms, unless the context clearly indicates other meanings.

It may be further understood that meanings of words such as "in response to" and "if" involved in the disclosure depend on a context and an actual usage scenario. For example, the word "in response to" as used herein may be interpreted as "when" or "in a case that..." or "in response to a determination".

It may be understood that although the terms first, second, third, etc. may be used to describe various information in the embodiments of the disclosure, such information should not be limited to these terms. These terms are used only to distinguish information in the same type from one another and do not indicate a specific order or a degree of importance. In fact, expressions such as "first" and "second" may be used interchangeably. For example, without departing from the scope of embodiments of the disclosure, the first information may also be referred to as the second information, and similarly, the second information may be referred to as the first information.

It may be further understood that, although operations are described in a particular order in the accompanying drawings, it may not be understood as requiring these operations be performed in a particular order or in serial order, or requiring all the operations illustrated to be performed to obtain a desirable result. In a given environment, multitasking and parallel processing may be advantageous.

Other implementation of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art.

It will be appreciated that the disclosure is not limited to the exact construction that has been described above and illustrated in the accompanying drawings, and that various modifications and changes may be made without departing from the scope thereof. It is intended that the scope of the disclosure only be limited by the appended claims.

## Claims

1. A method for a resource restriction indication, applied to a terminal, comprising:
receiving first configuration information, the first configuration information being used to configure at least one channel measurement resource (CMR), and the at least one CMR comprising N channel state information reference signal (CSI-RS) resources, where N is a positive integer; and
receiving second configuration information, the second configuration information being used to indicate the resource restriction indication corresponding to the N CSI-RS resources.

2. The method of claim 1, wherein the resource restriction indication comprises at least one of: a codebook subset restriction (CBSR) indication, an amplitude subset restriction indication, or a rank restriction indication.

3. The method of claim 2, wherein the resource restriction indication comprises the CBSR indication; and
the second configuration information comprises a CBSR indication bit string, and the CBSR bit string is used to configure the CBSR indication corresponding to the N CSI-RS resources.

4. The method of claim 3, wherein the CBSR indication bit string comprises a single CBSR indication bit string.

5. The method of claim 4, wherein the single CBSR indication bit string is used to indicate the same CBSR indication corresponding to the N CSI-RS resources.

6. The method of claim 4, wherein the single CBSR indication bit string comprises N sub-bit strings, and the N sub-bit strings are used to respectively indicate CBSR indications corresponding to the N CSI-RS resources.

7. The method of claim 3, wherein the CBSR indication bit string comprises N CBSR indication bit strings, and the N CBSR indication bit strings are used to respectively indicate CBSR indications corresponding to the N CSI-RS resources.

8. The method of claim 6 or 7, wherein the CBSR indications corresponding to the N CSI-RS resources correspond to the same number of bits.

9. The method of claim 6 or 8, wherein each sub-bit string in the N sub-bit strings comprises consecutive or non-consecutive bits in the single CBSR indication bit string.

10. The method of claim 7 or 8, wherein there is a one-to-one correspondence between the N CSI-RS resources and the N CBSR indication bit strings.

11. The method of claim 2, wherein the resource restriction indication comprises the amplitude subset restriction indication; and
the second configuration information comprises first indication information, and the first indication information is used to indicate amplitude coefficient information supported or unsupported by the N CSI-RS resources.

12. The method of claim 11, wherein the second configuration information comprises a single piece of first indication information.

13. The method of claim 12, wherein the single piece of first indication information is used to indicate the same amplitude subset restriction indication corresponding to the N CSI-RS resources.

14. The method of claim 12, wherein the single piece of first indication information comprises N bits, and the N bits respectively indicate amplitude subset restriction indications corresponding to the N CSI-RS resources.

15. The method of claim 11, wherein the second configuration information comprises N pieces of first indication information, and the N pieces of first indication information respectively indicate amplitude subset restriction indications corresponding to the N CSI-RS resources.

16. The method of claim 2, wherein the resource restriction indication comprises the rank restriction indication; and
the second configuration information comprises second indication information, and the second indication information is used to indicate rank information supported or unsupported by the N CSI-RS resources.

17. The method of claim 16, wherein the second configuration information comprises a single piece of second indication information.

18. The method of claim 17, wherein the single piece of second indication information is used to indicate the same rank restriction indication corresponding to the N CSI-RS resources.

19. The method of claim 17, wherein the single piece of second indication information comprises N sub-bit strings, and the N sub-bit strings respectively indicate rank restriction indications corresponding to the N CSI-RS resources.

20. The method of claim 16, wherein the second configuration information comprises N pieces of second indication information, and the N pieces of second indication information respectively indicates rank restriction indications corresponding to the N CSI-RS resources.

21. A method for a resource restriction indication, applied to a network device, comprising:
sending first configuration information, the first configuration information being used to configure at least one channel measurement resource (CMR), and the at least one CMR comprising N channel state information reference signal (CSI-RS) resources, where N is a positive integer; and
sending second configuration information, the second configuration information being used to indicate the resource restriction indication corresponding to the N CSI-RS resources.

22. The method of claim 21, wherein the resource restriction indication comprises at least one of: a codebook subset restriction (CBSR) indication, an amplitude subset restriction indication, or a rank restriction indication.

23. The method of claim 22, wherein the resource restriction indication comprises the CBSR indication; and
the second configuration information comprises a CBSR indication bit string, and the CBSR bit string is used to configure the CBSR indication corresponding to the N CSI-RS resources.

24. The method of claim 23, wherein the CBSR indication bit string comprises a single CBSR indication bit string.

25. The method of claim 24, wherein the single CBSR indication bit string is used to indicate the same CBSR indication corresponding to the N CSI-RS resources.

26. The method of claim 24, wherein the single CBSR indication bit string comprises N sub-bit strings, and the N sub-bit strings are used to respectively indicate CBSR indications corresponding to the N CSI-RS resources.

27. The method of claim 23, wherein the CBSR indication bit string comprises N CBSR indication bit strings, and the N CBSR indication bit strings are used to respectively indicate CBSR indications corresponding to the N CSI-RS resources.

28. The method of claim 26 or 27, wherein the CBSR indications corresponding to the N CSI-RS resources correspond to the same number of bits.

29. The method of claim 26 or 28, wherein each sub-bit string in the N sub-bit strings comprises consecutive or non-consecutive bits in the single CBSR indication bit string.

30. The method of claim 27 or 28, wherein there is a one-to-one correspondence between the N CSI-RS resources and the N CBSR indication bit strings.

31. The method of claim 22, wherein the resource restriction indication comprises the amplitude subset restriction indication; and
the second configuration information comprises first indication information, and the first indication information is used to indicate amplitude coefficient information supported or unsupported by the N CSI-RS resources.

32. The method of claim 31, wherein the second configuration information comprises a single piece of first indication information.

33. The method of claim 32, wherein the single piece of first indication information is used to indicate the same amplitude subset restriction indication corresponding to the N CSI-RS resources.

34. The method of claim 32, wherein the single piece of first indication information comprises N bits, and the N bits respectively indicate amplitude subset restriction indications corresponding to the N CSI-RS resources.

35. The method of claim 31, wherein the second configuration information comprises N pieces of first indication information, and the N pieces of first indication information respectively indicate amplitude subset restriction indications corresponding to the N CSI-RS resources.

36. The method of claim 22, wherein the resource restriction indication comprises the rank restriction indication; and
the second configuration information comprises second indication information, and the second indication information is used to indicate rank information supported or unsupported by the N CSI-RS resources.

37. The method of claim 36, wherein the second configuration information comprises a single piece of second indication information.

38. The method of claim 37, wherein the single piece of second indication information is used to indicate the same rank restriction indication corresponding to the N CSI-RS resources.

39. The method of claim 37, wherein the single piece of second indication information comprises N sub-bit strings, and the N sub-bit strings respectively indicate rank restriction indications corresponding to the N CSI-RS resources.

40. The method of claim 36, wherein the second configuration information comprises N pieces of second indication information, and the N pieces of second indication information respectively indicates rank restriction indications corresponding to the N CSI-RS resources.

41. An apparatus for a resource restriction indication, comprising:
a receiving unit, configured to receive first configuration information, the first configuration information being used to configure at least one channel measurement resource (CMR), and the at least one CMR comprising N channel state information reference signal (CSI-RS) resources, where N is a positive integer; and
the receiving unit is further configured to receive second configuration information, the second configuration information being used to indicate the resource restriction indication corresponding to the N CSI-RS resources.

42. An apparatus for a resource restriction indication, comprising:
a sending unit, configured to send first configuration information, the first configuration information being used to configure at least one channel measurement resource (CMR), and the at least one CMR comprising N channel state information reference signal (CSI-RS) resources, where N is a positive integer; and
the sending unit is further configured to send second configuration information, the second configuration information being used to indicate the resource restriction indication corresponding to the N CSI-RS resources.

43. A device for a resource restriction indication, comprising:
a processor; and
a memory for storing instructions executable by the processor,
wherein the processor is configured to implement the method of any one of claims 1 to 20.

44. A device for a resource restriction indication, comprising:
a processor; and
a memory for storing instructions executable by the processor,
wherein the processor is configured to implement the method of any one of claims 21 to 40.

45. A storage medium for storing instructions, wherein when the instructions in the storage medium are executed by a processor of a terminal, the terminal is caused to execute the method of any one of claims 1 to 20.

46. A storage medium for storing instructions, wherein when the instructions in the storage medium executed by a processor of a network device, the network device is caused to execute the method of any one of claims 21 to 40.
